# EUROPÄISCHE PATENTSCHRIFT

(11) **EP 2 116 911 B1**
(45) Veröffentlichungstag und Bekanntmachung des Hinweises auf die Patenterteilung: **15.01.2014**
(21) Anmeldenummer: 08008634.1
(22) Anmeldetag: 07.05.2008
(51) Int. Cl.: G05B 19/042

(54) **Automatisierungssystem und Verfahren zur Wiederherstellung der Betriebsfähigkeit eines Automatisierungssytems**
Automation system and method for putting an automation system back into operation
Système d'automatisation et procédé de reproduction de la capacité de fonctionnement d'un système d'automatisation

(43) Veröffentlichungstag der Anmeldung: 11.11.2009
(73) Patentinhaber: Siemens Aktiengesellschaft, 80333 München (DE)
(72) Erfinder: Danz, Mirko, 91058 Erlangen (DE); Extra, Johannes, 91052 Erlangen (DE)

(56) Entgegenhaltungen:
- EP-A- 1 283 456
- EP-A- 1 688 840
- WO-A-97/29409
- GB-A- 2 353 616
- US-A1- 2003 109 942
- US-A1- 2008 058 969

## Beschreibung

Die Erfindung betrifft ein Automatisierungssystem sowie ein Verfahren zur Wiederherstellung der Betriebsfähigkeit eines Automatisierungssystems umfassend mindestens ein Automatisierungsgerät, bevorzugt eine Anzahl an Automatisierungsgeräten.

Moderne technische Anlagen weisen heute einen hohen Automatisierungsgrad auf. Es wird versucht, möglichst viele der in der technischen Anlage anfallenden Aufgaben zu automatisieren. Daher umfasst das Automatisierungssystem einer modernen technischen Anlage in der Regel eine Vielzahl an Automatisierungsgeräten, welche jeweils zur Bearbeitung unterschiedlicher technischer Aufgaben eingerichtet sind. Die Betriebsfähigkeit derartiger Automatisierungssysteme hängt neben der Funktionsfähigkeit der eingesetzten Hardware sehr stark ab von der Funktionsfähigkeit und dem Zusammenspiel der insbesondere in den Automatisierungsgeräten eingesetzten Software und Daten ab. Diese Software umfasst üblicherweise Firmware sowie durch den Anwender erstellte Programme. Und diese Daten umfassen üblicherweise Konfigurations-, Parametrierungs-, System- und Anwenderdaten. Im Folgenden werden die Software und die Daten als Konfiguration des Automatisierungsgerätes bezeichnet.

Zur Projektierung eines derartigen Automatisierungssystems werden üblicherweise Engineeringsysteme verwendet. Zur Übertragung der aus der Projektierung entstandenen Konfigurationen ist das Engineeringsystem üblicherweise mit den Automatisierungsgeräten der technischen Anlage über ein Kommunikationsnetzwerk verbunden.

Mittels des Engineeringsystems werden Konfigurationen über das Kommuniukationsnetz an die Automatisierungsgeräte verteilt. Derartige Änderungen sind z.B. notwendig, wenn eine Aktualisierung der innerhalb des Automatisierungssystems verwendeten Software stattfinden soll oder wenn eine Anpassung oder Optimierung der Automatisierungssoftware an die jeweilige technische Aufgabe stattfinden soll.

Weiterhin kann das Engineeringsystem die Konfiguration eines Automatisierungsgerätes in einer geeigneten Form erzeugen, so dass diese über einen Kommunikationsdienst eines Kommunikationsnetzes bzw. wechselbares Speichermedium in das Automatisierungsgerät übertragen werden kann, ohne jedoch ein Engineeringsystem zu verwenden.

Änderungen, beispielsweise der Konfigurationsdaten, der Firmware oder der Anwenderdaten in einem Automatisierungsgerät können dazu führen, dass die Funktions- und/oder Kommunikationsfähigkeit dieses Geräts in einer Weise gestört werden kann, dass es nicht mehr ohne weiteres möglich ist, den Zustand vor der Veränderung wieder herzustellen. Beispielsweise kann eine Aktualisierung der Konfiguration fehlschlagen, so dass zur Aufrechterhaltung der Betriebsfähigkeit der technischen Anlage wieder zurückgegangen werden muss auf die ursprünglichen Daten.

Um den Zustand vor der Änderung wieder herstellen zu können, musste bisher vom Anwender vor dem Durchführen der Änderung eine Kopie der aktuellen Konfiguration aus dem Automatisierungsgerät abgezogen und extern gespeichert werden. Hierfür muss der Anwender qualifiziert sein und er muss die Verwaltung dieser abgezogenen Konfiguration selbst übernehmen. Falls die Änderung der Konfiguration, beispielsweise die vorher genannte Aktualisierung der Firmware, von einer entfernten Stelle aus über ein Kommunikationsnetzwerk stattfindet, so muss die unveränderte Konfiguration üblicherweise vom Anwender, der die Aktualisierung durchführt, über das Kommunikationsnetzwerk rückgesichert werden. Hierbei muss das Kommunikationsnetzwerk zum Übertragen der Rücksicherung eine Bandbreite vorhalten, welche dann nicht für Automatisierungsaufgaben zur Verfügung steht.

Bei komplexen technischen Anlagen mit einer Vielzahl an Automatisierungsgeräten tritt weiterhin das Problem auf, dass bei Änderungen bei einer Vielzahl von miteinander in Beziehung stehenden Automatisierungsgeräten, beispielsweise um einen gemeinsamen neuen Versionsstand der Konfiguration zu erreichen, das Fehlschlagen der Änderung bei z.B. nur einem Automatisierungsgerät dazu führt, dass bei allen Automatisierungsgeräten auf den ursprünglichen Versionsstand der Konfiguration zurückgegangen werden muss, um die Funktionsfähigkeit des gesamten Automatisierungssystems wiederherzustellen.

Zusammenfassend lässt sich feststellen, dass bei bekannten Automatisierungssystemen eine Sicherung der ursprünglichen Konfiguration manuell erfolgen und vom Anwender angestoßen werden muss. Weiterhin obliegt dem Anwender die Verwaltung der ursprünglich wirksamen, nicht geänderten Konfiguration. Wenn es erforderlich ist, beispielsweise bei einem Fehlschlagen einer Aktualisierung einer Firmware, die nicht geänderte, ursprüngliche Firmware wieder in ein oder mehrere Automatisierungsgeräte zurück zu laden, dann muss der Anwender die gesicherte, ursprüngliche Firmware manuell wieder in die betreffenden Automatisierungsgeräte zurück laden.

Aus der WO 97/29409 ist ein Computersystem bekannt, welches aufweist ein Feldmanagementsystem, eine Vielzahl von Kommunikationssystemen, ein verteiltes Kontrollsystem und im Feld verteilte Hardware. Bei diesem System werden Änderungen von Parametern eines Gegenstandes des Systems erkannt und gespeichert.

EP 1 688 840 A2 offenbart ein Kontrollsystem für den industriellen Einsatz, wobei das Kontrollsystem zum Datentransfer zu einzelnen, an das Kontrollsystem angeschlossenen Geräten vorgesehen ist.

Der Erfindung liegt die Aufgabe zugrunde, ein Automatisierungssystem anzugeben, bei welchem im Falle des Fehlschlagens einer Änderung an der Konfiguration die Betriebsfähigkeit des Automatisierungssystems schnell und sicher wieder hergestellt werden kann. Hierbei sollen insbesondere die eingangs genannten Nachteile des Standes der Technik überwunden werden.

Die Aufgabe wird durch ein Automatisierungssystem nach Anspruch 1 und durch ein Verfahren zur Wiederherstellung der Betriebsfähigkeit eines Automatisierungssystems gemäß Anspruch 6 gelöst.

Die im Automatisierungsgerät aktuell vorliegende und lauffähige Konfiguration wird folglich in ein vom Automatisierungsgerät selbst umfasstes lokales Speichermedium, den Speicher, als Sicherung geschrieben, wenn eine Veränderung an der aktuellen Konfiguration des Automatisierungsgeräts durchgeführt wird.

Das technische Mittel zur Veränderung einer aktuellen Konfiguration eines Automatisierungsgerätes, ist bevorzugt ein externer Speicher, umfassend die veränderte Konfiguration, welcher in das Automatisierungsgerät gesteckt wird. Hierbei kann der externe Speicher ein Wechselspeichermedium wie beispielsweise ein USB-Stick sein. Das technische Mittel zur Veränderung einer aktuellen Konfiguration eines Automatisierungsgerätes kann aber auch ein "intelligenter" und als Rechner ausgebildetes Engineeringssystem sein, beispielsweise umfassend ein weiteres Automatisierungsgerät oder eine Workstation, auf welchen die veränderten Konfigurationen abgelegt sind.

In einer weiteren bevorzugten Ausführungsform ist das Engineeringsystem mit dem mindestens einen Automatisierungsgerät über ein Kommunikationsnetzwerk verbunden und das automatische Speichern der unveränderten Konfiguration wird über einen Dienst des Kommunikationsnetzwerks angestoßen.

Hierbei kann das Kommunikationsnetzwerk einen weiteren Dienst umfassen, mittels welchem ein Zurückschreiben der unveränderten Konfiguration ausgelöst wird, wodurch die veränderte Konfiguration in dem mindestens einen Automatisierungsgerät überschrieben wird und so die Änderung rückgängig gemacht wird.

Der weitere Dienst kann hierbei ausgeführt werden, falls mindestens eines der Automatisierungsgeräte nach der Veränderung der Konfiguration einen erwarteten Zustand nicht erreicht.

In einer besonders bevorzugten Ausführungsform umfasst das Automatisierungssystem eine Anzahl an Automatisierungsgeräten und jedes Automatisierungsgerät umfasst einen Speicher zur lokalen Speicherung der unveränderten Konfiguration des jeweiligen Automatisierungsgeräts.

Bevorzugt umfasst mindestens ein Automatisierungsgerät ein lokales, manuell bedienbares Kontrollelement, mittels welchem ein Zurückschrieben der unveränderten Konfiguration in das Automatisierungsgerät ausgelöst werden kann, wodurch die veränderte Konfiguration überschrieben werden und so die Änderung rückgängig gemacht wird.

Der lokale Speicher der Automatisierungsgeräte zur Rücksicherung der unveränderten Konfiguration kann ein wechselbares Speichermedium oder ein in das Automatisierungsgerät integriertes Speichermedium umfassen.

Weiterhin kann der Speicher zur Sicherung bzw. Rücksicherung der unveränderten Konfiguration auch als ein entferntes, über ein Kommunikationsnetz angebundenes Speichermedium ausgeführt werden.

Die Erfindung führt weiterhin zu einem Verfahren zum Wiederherstellen der Betriebsfähigkeit eines Automatisierungssystems, umfassend eine Anzahl an Automatisierungsgeräten, mit folgenden Schritten:
- Bereitstellen von geänderten Konfigurationen für mindestens eines der Automatisierungsgeräte,
- Speichern der unveränderten Konfiguration des jeweiligen Automatisierungsgeräts auf einem lokalen oder entfernten Speicher des jeweiligen Automatisierungsgeräts,
- Einspielen der geänderten Konfiguration in das jeweilige Automatisierungsgerät,
- Ausführen und Bearbeiten der geänderten Konfiguration durch das jeweilige Automatisierungsgerät,
- Prüfung des jeweiligen Automatisierungsgeräts, ob das Ausführen und Bearbeiten der geänderten Konfiguration zu einem gewünschten Zustand des jeweiligen Automatisierungsgeräts führt, und
- Zurückspielen der jeweiligen unveränderten Konfiguration in alle Automatisierungsgeräte, bei denen zuvor eine Änderung der jeweiligen Konfiguration vorgenommen wurde, aus dem lokalen oder entfernten Speicher des jeweiligen Automatisierungsgeräts, falls die Prüfung mindestens eines der Automatisierungsgeräte einen unerwünschten Zustand ergab.

Die Erfindung und ihre bevorzugten Ausführungsformen basieren u.a. darauf, dass eine Wiederherstellung der Betriebsfähigkeit des Automatisierungssystems dann besonders schnell und sicher erfolgen kann, wenn vor einer Veränderung der Konfigurationen die zuvor vorhandenen, ursprünglichen Konfigurationen gesichert werden, und zwar auf einen lokalen Speicher, der vom betreffenden Automatisierungsgerät selbst umfasst ist, oder auf einen entfernten Speicher. Jedes Automatisierungsgerät des erfindungsgemäßen Automatisierungssystems hält also seinen eigenen Speicher zur Aufnahme der zuvor wirksamen Konfiguration bereit. Das Sichern der unveränderten Konfiguration kann manuell oder auch bevorzugt über einen Dienst des Kommunikationsnetzwerks angestoßen werden. Wenn nun nach einer Veränderung der Konfiguration die Notwendigkeit besteht, die gesicherte Konfiguration wieder zurückzuholen, dann kann der Anwender auf die gesicherte Konfiguration des betreffenden Automatisierungsgeräts selbst zurückgreifen. Der lokalen oder entfernten Speicherung der unveränderten Konfiguration kommt folglich eine hohe Bedeutung zu im Zusammenhang mit der vorliegenden Erfindung. Das Rückspeichern der unveränderten Konfiguration kann durch eine manuelle Bedienhandlung am Gerät selbst, oder auch durch einen weiteren Dienst des Kommunikationsnetzwerks angestoßen werden. Das Rückspeichern kann ausgelöst werden, wenn beispielsweise nach dem Laden einer neuen Konfiguration ein durch den Anwender spezifizierbarer Systemzustand des betreffenden Automatisierungsgeräts nicht erreicht wird. Um die Funktionsfähigkeit des Automatisierungsgeräts wiederherzustellen, muss dann ein Rückgriff auf die gesicherten, unveränderten Konfigurationen stattfinden.

Um das Rückspeichern der unveränderten Konfiguration zu automatisieren und dadurch Fehler weiter zu minimieren, kann die Firmware des betreffenden Automatisierungsgeräts so aufgeteilt werden, dass ein Teil dieser Firmware unverändert im Automatisierungsgerät verbleibt, auch bei einer Änderung der Firmware, und dass nur ein zweiter Teil der Firmware bei einer Änderung der Firmware durch den Anwender verändert werden kann. Derjenige für den Anwender unveränderliche Teil der Firmware kann nun Funktionen zur Verfügung stellen, über welche die gespeicherte, unveränderte Konfiguration rückgespeichert werden kann. Hierbei kann es also nicht passieren, dass durch eine Änderung von Konfigurationen die Rückspeicherfähigkeit des Automatisierungsgeräts verloren gehen kann.

Weiterhin lässt sich anführen, dass bei einem erfindungsgemäßen Automatisierungssystem die nicht veränderten Konfigurationen, also die Sicherungen, nicht extern verwaltet werden müssen, sondern dass für das jeweilige Automatisierungsgerät selbst die Konfiguration lokal oder entfernt vorgehalten wird. Dies bringt weiterhin den Vorteil, dass bei der genannten lokalen Speicherung dieser Konfiguration keine Bandbreite auf dem Kommunikationsnetzwerk belegt werden muss.

Es ist also allein mit lokalen Mitteln des jeweiligen Automatisierungsgeräts möglich, die Funktionsfähigkeit des Automatisierungsgeräts wiederherzustellen.

Im Folgenden wird ein Ausführungsbeispiel der Erfindung näher erläutert. Es zeigt:
- FIG: eine schematische Darstellung eines erfindungsgemäßen Automatisierungssystems.

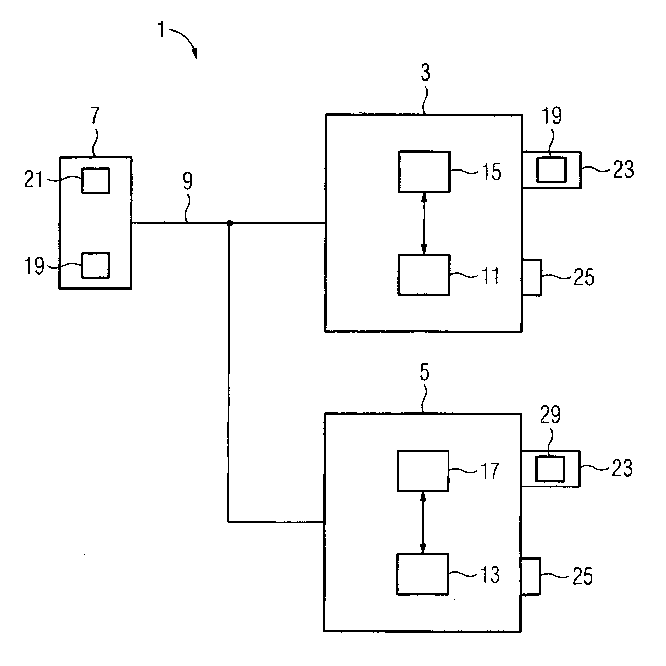

Die Figur zeigt ein erfindungsgemäßes Automatisierungssystem 1, umfassend Automatisierungsgeräte 3, 5.

Zur Projektierung des Automatisierungssystems 1 ist ein Engineeringsystem 7, ausgebildet als Rechner oder als weiteres Automatisierungsgerät, vorgesehen. Alternativ oder in Ergänzung hierzu kann das Gerät zur Veränderung einer Konfiguration auch ausgebildet sein als ein Wechselspeichermedium 23, beispielsweise ein USB-Stick.

Das Engineeringsystem 7 ist mittels eines Kommunikationsnetzwerks 9 mit den Automatisierungsgeräten 3, 5 verbunden.

Die Automatisierungsgeräte 3, 5 umfassen jeweils einen lokalen Arbeitsspeicher 15, 17 und einen lokalen Speicher 11, 13 zur Sicherung der aktuell wirksamen Konfiguration.

Laufende Programm- und Datenverarbeitung während des Betriebs erfolgt im Wesentlichen im lokalen Arbeitsspeicher 15, 17.

Wenn nun mittels des Engineeringsystems 7 oder mittels des Wechselspeichermediums 23 die Konfigurationen des Automatisierungsgeräts 3 und/oder 5 verändert werden sollen, so geschieht dies dadurch, dass das Engineeringsystem 7 eine Konfiguration 19 bestehend aus Firmware, Programmen, Anwenderdaten etc. oder auch nur Teile davon an das Automatisierungsgerät 3 sowie eine Aktualisierung der Konfiguration 21 an das Automatisierungsgerät 5 über das Kommunikationsnetzwerk 9 verteilt. Das Verteilen dieser Konfigurationen wird durch einen Kommunikationsdienst des Kommunikationsnetzwerks 9 gesteuert.

Alternativ kann die Veränderung der Konfiguration 19 für das Automatisierungsgerät 3 auch mittels des Wechselspeichermediums 23 lokal erfolgen. Dasselbe gilt selbstverständlich auch für die Veränderung der Konfiguration 21 betreffend das Automatisierungsgerät 5.

Bevor die Konfiguration 19, 21 in den lokalen Arbeitsspeicher 15, 17 geladen wird, erfolgt eine Sicherung der unveränderten Konfiguration in den lokalen Sicherungs-Speicher 11 des Automatisierungsgeräts 3 bzw. in den lokalen Sicherungs-Speicher 13 des Automatisierungsgeräts 5.

Erst danach nimmt der lokale Arbeitsspeicher 15, 17 die Veränderung der Konfiguration 19 bzw. 21 entgegen.

Nun kann es vorkommen, dass mindestens eines der Automatisierungsgeräte 3 und/oder 5 nach der Veränderung nicht mehr in einer gewünschten Art und Weise funktioniert.

Um die Funktionsfähigkeit des erfindungsgemäßen Automatisierungssystems 1 wieder herzustellen, wird nun mittels eines lokalen Kontrollelements 25 oder mittels eines weiteren Dienstes des Kommunikationsnetzwerks 9 ein Rückspeichern der im lokalen Sicherungs-Speicher 11 bzw. 13 vorhandenen, zuvor wirksamen Konfiguration in den lokalen Arbeitsspeicher 15 bzw. 17 veranlasst. Damit geht das Automatisierungssystem 1 zurück in seinen ursprünglichen lauffähigen Zustand vor der geplanten Änderung der Konfiguration.

## Patentansprüche

1. Automatisierungssystem (1), umfassend mindestens ein Automatisierungsgerät (3, 5) zur Automatisierung eines technischen Prozesses und ein Engineeringgerät (7, 23) zur Erzeugung einer geänderten Konfiguration umfassend zumindest Teile einer Firmware, oder/und zumindest Teile eines Programms oder/und zumindest Teile von Anwenderdaten des mindestens einen Automatisierungsgeräts (3, 5),
wobei das mindestens eine Automatisierungsgerät (3, 5) einen dem Automatisierungsgerät (3, 5) zugeordneten lokalen Speicher (11, 13) umfasst, in welchem bei Veränderung der Konfiguration des Automatisierungsgeräts (3, 5) die unveränderte Konfiguration separat speicherbar ist und dass das mindestens eine Automatisierungsgerät (3, 5) derart eingerichtet ist, dass die unveränderte Konfiguration mit Beginn der Veränderung automatisch in den lokalen Speicher (11, 13) geschrieben wird, **dadurch gekennzeichnet, dass** ein Kommunikationsnetzwerk (9) einen weiteren Dienst umfasst,
mittels welchem ein Zurückschreiben der unveränderten Konfiguration ausgelöst wird, wodurch die veränderte Konfiguration in dem mindestens einen Automatisierungsgerät (3, 5) überschrieben wird und so die Veränderung rückgängig gemacht wird und wobei der weitere Dienst ausgeführt wird, falls mindestens eines der Automatisierungsgeräte (3, 5) nach der Veränderung der Konfiguration einen erwarteten Zustand nicht erreicht, wobei das Automatisierungssystem weiterhin ein lokales, mindestens einem der Automatisierungsgeräte (3, 5) zugeordnetes Kontrollelement (25) zur Auslösung eines Zurückschreibens der unveränderten Konfiguration in das jeweilige Automatisierungsgerät (3, 5) umfasst, wodurch die veränderten Konfigurationen überschrieben werden und so die Änderung rückgängig gemacht wird.

2. Automatisierungssystem (1) nach Anspruch 1, wobei das Engineeringgerät (7, 23) einen Rechner umfasst, beispielsweise ein weiteres Automatisierungsgerät oder eine Workstation.

3. Automatisierungssystem (1) nach Anspruch 1 oder 2, wobei das Engineeringgerät (7, 23) mit dem mindestens einen Automatisierungsgerät (3, 5) über das Kommunikationsnetzwerk (9) verbunden ist und das automatische Speichern der unveränderten Konfiguration über einen Dienst des Kommunikationsnetzwerks (9) angestoßen wird.

4. Automatisierungssystem (1) nach einem der Ansprüche 1 bis 3, wobei das Automatisierungssystem (1) eine Anzahl an Automatisierungsgeräten (3, 5) umfasst und jedes Automatisierungsgerät (3, 5) einen lokalen Speicher (11, 13) oder entfernten Speicher (11, 13) zur Speicherung der unveränderten Konfiguration des jeweiligen Automatisierungsgeräts umfasst.

5. Automatisierungssystem (1) nach einem der Ansprüche 1 bis 4, wobei der lokale Speicher (11, 13) ein wechselbarer, z.B. ein USB Stick, oder ein in das Automatisierungsgerät integrierter, nichtflüchtiger Speicher ist.

6. Verfahren zur Wiederherstellung der Betriebsfähigkeit eines Automatisierungssystems (1) umfassend eine Anzahl an Automatisierungsgeräten (3, 5), mit folgenden Schritten:
- Bereitstellen einer geänderten Konfiguration umfassend zumindest Teile einer Firmware oder/und zumindest Teile eines Programms oder/und zumindest Teile von Anwenderdaten des mindestens einen Automatisierungsgeräts für das mindestens eine Automatisierungsgerät (3, 5),
- Speichern der unveränderten Konfiguration des jeweiligen Automatisierungsgeräts (3, 5) in einem dem jeweiligen Automatisierungsgerät (3, 5) zugeordneten lokalen Speicher (11, 13),
- Einspielen der geänderten Konfiguration in das jeweilige Automatisierungsgerät (3, 5),
- Ausführen und Bearbeiten der geänderten Konfiguration durch das jeweilige Automatisierungsgeräts (3, 5),
- Prüfung des jeweiligen Automatisierungsgeräts (3, 5), ob das Ausführen und Bearbeiten der geänderten Konfiguration zu einem gewünschten Zustand des jeweiligen Automatisierungsgeräts (3, 5) führt, und
- Zurückspielen der jeweiligen unveränderten Konfiguration in alle Automatisierungsgeräte (3, 5), bei denen zuvor eine Änderung der jeweiligen Konfiguration vorgenommen wurde, aus dem lokalen Speicher (11, 13), falls die Prüfung mindestens eines der Automatisierungsgeräte (3, 5) einen unerwünschten Zustand ergab,
wobei das Automatisierungssystem weiterhin ein lokales, mindestens einem der Automatisierungsgeräte (3, 5) zugeordnetes Kontrollelement (25) zur Auslösung eines Zurückschreibens der unveränderten Konfiguration in das jeweilige Automatisierungsgerät (3, 5) umfasst, wodurch die veränderten Konfigurationen überschrieben werden und so die Änderung rückgängig gemacht wird.

## Claims

1. Automation system (1), comprising at least one automation device (3, 5) for automating a technical process and an engineering device (7, 23) for creating a changed configuration comprising at least parts of a firmware and/or at least parts of a program and/or at least parts of user data of the at least one automation device (3, 5),
wherein the at least one automation device (3, 5) includes a local memory (11, 13) assigned to the automation device (3, 5), in which, when the configuration of the automation device (3, 5) is changed, the unchanged configuration is able to be stored separately and the at least one automation device (3, 5) is configured so that the unchanged configuration is written automatically into the local memory (11, 13) when the change begins, **characterised in that** a communication network (9) includes a further service, by means of which a writing back of the unchanged configuration is triggered, by which the changed configuration is overwritten in the at least one automation device (3, 5) and the change is thus reversed, and wherein the further service is executed if at least one of the automation devices (3, 5) does not reach an expected state after the configuration has been changed, wherein the automation system also comprises a local control element (25) assigned to at least one of the automation devices (3, 5) for triggering the writing back of the unchanged configuration into the respective automation device (3, 5), by which the changed configuration is overwritten and the change thus reversed.

2. Automation system (1) according to claim 1, wherein the engineering device (7, 23) includes a processor, for example a further automation device or a workstation.

3. Automation system (1) according to claim 1 or 2, wherein the engineering device (7, 23) is connected to the at least one automation device (3, 5) via the communication network (9) and the automatic storage of the unchanged configuration is initiated via a service of the communication network (9).

4. Automation system (1) according to one of claims 1 to 3, wherein the automation system (1) comprises a number of automation devices (3, 5) and each automation device (3, 5) includes a local memory (11, 13) or remote memory (11, 13) for storing the unchanged configuration of the respective automation device.

5. Automation system (1) according to one of claims 1 to 4, wherein the local memory (11, 13) is removable memory, e.g. a USB stick, or non-volatile memory integrated into the automation device.

6. Method for restoring the operability of an automation system (1) comprising a number of automation devices (3, 5), with the following steps:
- Provision of a changed configuration comprising at least parts of a firmware and/or at least parts of a program and/or at least parts of user data of the at least one automation device for the at least one automation device (3, 5),
- Storing the unchanged configuration of the respective automation device (3, 5) in a local memory (11, 13) assigned to the respective automation device (3, 5) in each case,
- Copying the changed configuration into the respective automation device (3, 5),
- Execution and processing of the changed configuration by the respective automation device (3, 5),
- Checking by the respective automation device (3, 5), as to whether the execution and processing of the changed configuration is leading to a desired state of the respective automation device (3, 5), and
- Copying the respective unchanged configuration back from the local memory (11, 13), into all automation devices (3, 5) in which the respective configuration was previously changed, if the checking of at least one of the automation devices (3, 5) produced an undesired state,
wherein the automation system further comprises a local control element (25) assigned to at least one of the automation devices (3, 5) for initiating a writing back of the unchanged configuration into the respective automation device (3, 5), by which the changed configurations will be overwritten and the change thus reversed.

## Revendications

1. Système ( 1 ) d'automatisation, comprenant au moins un appareil (3, 5 ) d'automatisation, pour l'automatisation d'une opération technique, et un appareil ( 7, 23 ) d'ingénierie, pour la production d'une configuration modifiée, comprenant au moins des parties d'un microprogramme ou/et au moins des parties d'un programme ou/et au moins des parties de données utilisateurs du au moins un appareil ( 3, 5 ) d'automatisation,
dans lequel le au moins un appareil ( 3, 5 ) d'automatisation comprend une mémoire ( 11, 13 ) locale qui est associée à l'appareil ( 3, 5 ) d'automatisation et dans laquelle, si la configuration de l'appareil ( 3,5 ) d'automatisation se modifie, la configuration inchangée peut être mémorisée séparément, et en ce que le au moins un appareil ( 3, 5 ) d'automatisation est agencé de manière à écrire la configuration inchangée au début de la modification automatiquement dans la mémoire ( 11, 13 ) locale, **caractérisé en ce qu'**un réseau ( 9 ) de communication comprend un autre service au moyen duquel une réécriture de la configuration inchangée est déclenchée, de sorte que la configuration modifiée est écrasée dans le au moins un appareil ( 3, 5 ) d'automatisation et on revient ainsi sur la modification, et dans lequel l'autre service est exécuté si au moins l'un des appareils ( 3, 5 ) d'automatisation n'atteint pas, après le changement de configuration, un état escompté, le système d'automatisation comprenant en outre, pour le déclenchement d'une réécriture de la configuration inchangée dans l'appareil ( 3, 5 ) d'automatisation respectif, un élément ( 25 ) de commande locale associée au moins à l'un des appareils ( 3, 5 ) d'automatisation, de manière à écraser les configurations modifiées et à revenir ainsi sur la modification.

2. Système ( 1 ) d'automatisation suivant la revendication 1, dans lequel l'appareil ( 7, 23 ) d'ingénierie comprend un ordinateur, par exemple un autre appareil d'automatisation ou un poste de travail.

3. Système ( 1 ) d'automatisation suivant la revendication 1 ou 2, dans lequel l'appareil ( 7, 23 ) d'ingénierie est relié au au moins un appareil ( 3, 5 ) d'automatisation par le réseau ( 9 ) de communication et la mémorisation automatique de la configuration inchangée s'appuie sur un service du réseau ( 9 ) de communication.

4. Système ( 1 ) d'automatisation suivant l'une des revendications 1 à 3, dans lequel le système ( 1 ) d'automatisation comprend un certain nombre d'appareils ( 3, 5 ) d'automatisation et chaque appareil ( 3, 5 ) d'automatisation comprend une mémoire ( 11, 13 ) locale ou une mémoire ( 11, 13 ) à distance de mémorisation de la configuration inchangée de l'appareil d'automatisation respectif.

5. Système ( 1 ) d'automatisation suivant l'une des revendications 1 à 4, dans lequel la mémoire ( 11, 13 ) locale est une clé échangeable, par exemple une clé USB, ou une mémoire rémanente intégrée dans l'appareil d'automatisation.

6. Procédé de rétablissement de la capacité à fonctionner d'un système ( 1 ) d'automatisation comprenant un certain nombre d'appareils ( 3, 5 ) d'automatisation, par les stades suivants :
- on met à disposition une configuration modifiée comprenant au moins des parties d'un microprogramme ou/et au moins des parties d'un programme ou/et au moins des parties de données utilisateurs du au moins un appareil d'automatisation pour le au moins un appareil ( 3, 5 ) d'automatisation,
- on mémorise la configuration inchangée de l'appareil ( 3, 5 ) d'automatisation respectif dans une mémoire ( 11, 13 ) locale associée à l'appareil ( 3, 5 ) d'automatisation respectif,
- on entre la configuration modifiée dans l'appareil ( 3, 5 ) d'automatisation respectif,
- on exécute et on traite la configuration modifiée par l'appareil ( 3, 5 ) d'automatisation respectif,
- on contrôle l'appareil ( 3, 5 ) d'automatisation respectif sur le point de savoir si l'exécution et le traitement de la configuration modifiée donnent un état souhaité de l'appareil ( 3, 5 ) d'automatisation respectif,
- on revient à la configuration inchangée respective dans tous les appareils ( 3, 5 ) d'automatisation dans lesquels on a effectué auparavant un changement de la configuration respective à partir de la mémoire ( 11, 13 ) locale, si le contrôle d'au moins l'un des appareils ( 3, 5 ) d'automatisation a donné un état qui n'est pas souhaité,
dans lequel le système d'automatisation comprend en outre un élément ( 25 ) de commande local qui est associé à au moins l'un des appareils ( 3, 5 ) d'automatisation et qui est destiné à déclencher une réécriture de la configuration inchangée dans l'appareil ( 3, 5 ) d'automatisation respectif, de manière à écraser la configuration modifiée et à revenir ainsi sur le changement.
